(19) Europäisches Patentamt / European Patent Office / Office européen des brevets

(11) **EP 2 336 092 B1**

(12) **EUROPEAN PATENT SPECIFICATION**

(45) Date of publication and mention
of the grant of the patent:
**11.07.2018 Bulletin 2018/28**

(51) Int Cl.:
*C03B 23/043* $^{(2006.01)}$    *C03B 37/012* $^{(2006.01)}$

(21) Application number: **10192637.6**

(22) Date of filing: **25.11.2010**

(54) **Glass preform drawing apparatus**

**Ziehvorrichtung für Glasvorformen**

**Dispositif d'étirage de préforme de verre**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.12.2009 JP 2009275690**

(43) Date of publication of application:
**22.06.2011 Bulletin 2011/25**

(73) Proprietor: **Shin-Etsu Chemical Co., Ltd.
Tokyo (JP)**

(72) Inventor: **Otosaka, Tetsuya
ANNAKA-SHI Gunma (JP)**

(74) Representative: **Weber, Jean-François et al
Cabinet Didier Martin
50, chemin des Verrières
B.P. 28
69751 Charbonnières-les-Bains Cedex (FR)**

(56) References cited:
**EP-A1- 0 881 196      EP-A1- 1 609 768
JP-A- 2004 168 572    US-A- 5 931 984
US-A- 6 138 481       US-A1- 2002 088 253**

## Description

BACKGROUND OF THE INVENTION

### 1. Field of the invention

The present invention relates to a glass preform drawing apparatus for producing a glass rod having a uniform outer diameter by heating a glass preform, such as an optical fiber preform ingot, in a heating furnace, and drawing the heated preform to a desired outer diameter.

### 2. Description of the related art

Among apparatuses for producing a glass rod having a desired outer diameter by heating and drawing a glass preform as represented by an optical fiber preform ingot and the like, some include a housing for the glass preform called a top chamber at an upper portion of the apparatus, as described in Japanese Patent Application Publications Nos. 11-147731, 11-060259, 06-256034, and 11-209137. Also US-A-2002088253 and US-A-5931985 disclose a preform drawing apparatus including a top chamber. FIG. 2 shows a schematic view of a glass preform drawing apparatus including a top chamber. A glass preform 101 is heated by a heater 103 that is disposed inside a heating furnace 102. While being fed into the furnace by a feeding mechanism 104, the glass preform 101 is extracted by an extracting mechanism 105 that moves downward at a higher speed than the feeding speed. A glass rod 110 thus obtained has a diameter smaller than that of the glass preform 101.

Because of the considerably high heating temperature of around 2300 K, the heater 103 disposed inside and the heating furnace 102 and a heat insulating material (illustration omitted) around the heater 103 are normally formed of carbon-based materials. However, such carbon-based materials as isotropic graphite, carbon-molded heat insulating materials, and CC composites are consumed by oxidation when exposed to an oxygen-containing atmosphere at a high temperature of 770 K or higher. Accordingly, the inside of the heating furnace 102 is maintained in an atmosphere of an inert gas such as nitrogen gas or argon gas.

The glass preform 101 includes a tapered portion 107 at an upper end portion thereof and a straight body portion 106, which also has a variation in diameter. For this reason, a special sealing device is needed to prevent a gas from leaking from an upper portion of the heating furnace 102. There is a method of providing a top chamber 108 over the upper portion of the heating furnace 102 as one means for sealing, the top chamber 108 also serving as a housing for the glass preform 101.

In this method, a shaft 109 provided to support the glass preform 101 has a uniform outer diameter. This helps to narrow a gap between the shaft 109 and a shaft insertion hole provided in the center of an upper portion of the top chamber 108. By appropriately maintaining the amount of an inert gas supplied into the heating furnace 102, outside air is prevented from flowing through the gap of the shaft insertion hole, and the oxygen concentration in the furnace can be kept sufficiently low.

The glass preform drawing apparatus including the top chamber 108 inevitably needs to have the length of the shaft 109 longer than the length of the top chamber 108, and have the feeding mechanism 104 with a long stroke for putting in or taking out the glass preform 101. This consequently makes the height of the apparatus quite high, leading to a problem of the increased cost for the apparatus, and so forth. Against such problems, top chambers having various structures and made of various materials are proposed.

In Japanese Patent Application Publication No. 11-147731, the top chamber 108 is opened right and left at the middle of a front surface thereof. The glass preform 101 is put in or taken out through the front surface of the top chamber 108. Thereby, the stroke of the feeding mechanism 104 necessary for putting a glass preform into the heating furnace 102 is reduced. Here, as the material of the top chamber 108, stainless steel, which is an opaque material, is mentioned.

In Japanese Patent Application Publication No. 11-060259, the top chamber 108 is constituted of multiple slidable cylinders, and it is thus made expandable and contractible. Thereby, the length of the shaft 109 and the stroke of the feeding mechanism 104 are reduced, and the apparatus height is reduced. Here, as the material of the top chamber 108, stainless steel, which is an opaque material, is mentioned.

In Japanese Patent Application Publication No. 06-256034, the top chamber 108 has an expandable and contractible accordion structure. As the material of the top chamber 108, used is a material obtained by coating the outside of an aluminum coated-carbon fiber, which is an opaque material, with a silicone resin.

In Japanese Patent Application Publication No. 11-209137, disclosed is the top chamber 108 in which a water-cooled expandable and contractible furnace core tube is disposed inside an accordion double tube. The material of each accordion tube is a heat-resistant, heat-insulating sheet material, and the water-cooled expandable and contractible furnace core tube is made of a metal, both of which are made of opaque material.

SUMMARY OF THE INVENTION

A glass preform is heated by a heater to approximately 2100 to 2500 K. Radiated light generated in the heating step is totally reflected through the glass preform, thereby being transmitted upward, and radiated laterally from a tapered portion at an upper portion of the glass preform. A larger outer diameter of the glass preform or a higher heating temperature of the heater increases the intensity of the light to be radiated. Incidentally, the lateral light radiation hardly occurs from a straight body portion of the glass preform, because the light generated by heating is totally reflected and transmitted upward.

Recently, to improve the productivity, the size of a glass preform and the drawing speed have been increased. To increase the drawing speed, the setting temperature of a heater tends to be high. In addition, the light radiated from a tapered portion is radiated onto an inner surface of a top chamber, and the top chamber reflects or absorbs the radiated light because the top chamber is made of an opaque material as described in Japanese Patent Application Publications Nos. 11-147731, 11-060259, 06-256034, and 11-209137. The reflected light is again radiated toward the glass preform, increasing the temperature of the tapered portion. Meanwhile, the absorbed light increases the temperature of the top chamber. Thus, in this case also, the temperature of the tapered portion may be increased.

A quite small amount of light is radiated laterally from a straight body portion of the glass preform. Accordingly, the rate of temperature rise of the straight body portion is slow. Due to such a mechanism, the temperature of the tapered portion at the upper portion of the glass preform may be increased higher than the temperature of the straight body portion.

The outer diameter of a glass rod to be obtained by drawing a glass preform is determined by: the speed of feeding the glass preform, the speed of extracting the glass rod, and the outer diameter of the glass preform. When the tapered portion at the upper portion of the glass preform is softened at a high temperature, the tapered portion elongates. Thereby, the speed of feeding the glass preform into a heating furnace is a speed obtained by adding the moving speed of a feeding mechanism to the elongating speed of the tapered portion.

As a result, the glass preform may be fed into the heating furnace at a speed higher than an intended speed. Thus, the outer diameter of the drawn glass rod may become larger than intended.

An object of the present invention is to provide a glass preform drawing apparatus capable of feeding a glass preform into a heating furnace at a predetermined feeding speed, and producing a glass rod having a uniform diameter.

A glass preform drawing apparatus of the present invention is for producing a glass rod having a desired outer diameter by heating and drawing a glass preform. The drawing apparatus includes a top chamber; a heating furnace; and a feeding unit and an extracting unit for the glass preform, wherein at a normal operating temperature T (K) of the heating furnace, the top chamber is transparent at a wavelength of $\lambda(\mu m)$ expressed by the following formula 1:

$$\lambda = 2898/T.$$

The normal operating temperature T is in the range 2100 to 2500 K.

It is preferable that the glass preform and the top chamber may be made of silica glass.

The glass preform drawing apparatus of the present invention may be particularly effective in a case in which a glass rod produced by drawing a preform has an outer diameter of 110 mm or more.

The glass preform drawing apparatus of the present invention may suppress temperature rise of a tapered portion of the glass preform, which suppresses unintended elongation of the tapered portion and makes uniform the outer diameter of the drawn glass rod. Even if the glass rod produced by the drawing has an outer diameter of 110 mm or more, the glass rod thus obtained may have a small variation in diameter.

Furthermore, the apparatus of the present invention may not require a heat insulating layer on the top chamber, and also may not require a water-cooling structure that is required for a metallic top chamber. Thus, the apparatus may be simplified and the cost reduction is achieved.

BRIEF DESCRIPTION OF THE INVENTION

FIG. 1 shows a schematic view of a glass preform drawing apparatus including a top chamber according to the present invention.
FIG. 2 shows a schematic view of a glass preform drawing apparatus including a top chamber according to the related art.

DETAILED DESCRIPTION OF THE INVENTION

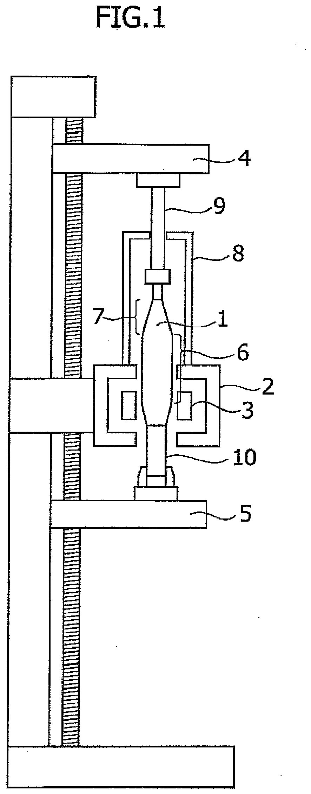

A glass preform drawing apparatus according to one embodiment of the present invention includes a top chamber 8, a heating furnace 2, a feeding mechanism 4 and an extracting mechanism 5, as illustrated in Fig. 1. The glass preform drawing apparatus of the present invention has the following features. The drawing apparatus includes the top chamber 8 on top of the heating furnace 2, and the top chamber 8 houses a glass preform 1, At a normal operating temperature T (K) of the heating furnace 2, which is in the range 2100 to 2500 K, the top chamber 8 is transparent at a wavelength of $\lambda(\mu m)$ which is expressed by the following formula 1:

$$\lambda = 2898/T.$$

In the formula, $\lambda$ indicates a central wavelength of light radiated from a black body according to Wien's displacement law, and represents a wavelength of light radiated from a heater 3 and a heated portion of the glass preform 1. The actual radiated light has a broad spectrum with $\lambda$ as the peak wavelength.

When the material of the top chamber 8 has a high transmittance to radiated light having a wavelength of $\lambda$, the top chamber 8 absorbs only a small amount of radiated light, and thus is hardly heated. This keeps the temperature of a tapered portion 7 at an upper portion of the glass preform 1 housed in the top chamber 8 low, thereby suppressing unintended elongation of the tapered portion 7. Consequently, the outer diameter of a glass rod 10 to be drawn is made uniform.

In a preferred embodiment of the present invention, the material of the top chamber is silica glass.

If the temperature of 2100 to 2500 K in the drawing step is assigned to the above-described formula 1, the wavelength $\lambda$ is 1.16 to 1.38 $\mu$m. Silica glass is substantially completely transparent in this wavelength range. In glass silica having a surface thickness in a practical range of several millimeters to several over ten millimeters, it is only necessary to consider approximately 7%-surface reflection in total caused by the front and back surfaces, and the transmittance thereof reaches 93%. This allows the light radiated from the tapered portion at the upper portion of the glass preform to escape considerably efficiently to the outside, thereby suppressing the temperature rise of the tapered portion.

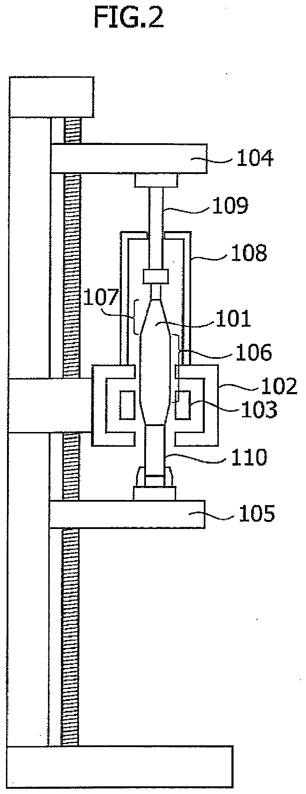

Furthermore, silica glass is excellent in stability of the shape at high temperature, and the thermal expansion coefficient is quite small. Accordingly, when a large glass preform is drawn, a heat insulating layer and a water-cooling structure required for a metallic top chamber are no longer necessary. Thus, the apparatus is simplified and cost reduction may be achieved. Examples of the structure of the top chamber include a simple cylindrical shape as shown in FIG. 2, an expandable and contractible structure owing to multilayered cylinders as described in Japanese Patent Application Publication No. 11-060259, and the like.

Conventionally, a portion of a drawn glass rod at which the outer diameter greatly varies has been corrected by re-drawing the glass rod with known glass lathes. However, correction by drawing with known glass lathes is very difficult or impossible in a case of a glass rod having an outer diameter of 110 mm or larger, because the thermal efficiency drops. Thus, when a glass rod is to be drawn to a target outer diameter of 110 mm or larger, the effectiveness of the drawing apparatus of the present invention is particularly strongly exhibited: a glass rod having a small diameter variation can be produced.

EXAMPLES

Example 1

Using the apparatus shown in FIG. 1, the glass preform 1 for an optical fiber preform was drawn to have a target outer diameter d = 120 mm. The glass preform 1 included an effective portion having an average outer diameter of 170.5 mm and a length of 1000 mm, and approximately 300-mm tapered portions on both ends of the effective portion. The material of the top chamber 8 was silica glass. During the drawing step, the inside of the heating furnace 2 was maintained in an atmosphere of nitrogen gas at a temperature of 2300 K.

The drawing condition was determined according to the following formula:

$$V_2 = V_1 \times (D/d)^2$$

wherein $V_1$ was determined according to the following formula:

$$V_2 = V_1 \times (D/d)^2$$

wherein $V_1$ is the speed of feeding the glass preform ($V_1$ = 10 mm/min); $V_2$ is the speed of extracting the glass rod; and D is the outer diameter of a drawn portion of the glass preform.

In the glass rod obtained by drawing the effective portion of the glass preform, the maximum outer diameter near a drawing-terminating end was 125.4 mm, and a portion with a diameter exceeding the acceptable range of the outer diameter variation of 120 $\pm$ 1.2 mm was 250 mm in length.

The use of the glass preform drawing apparatus of the present invention leads to cost reduction for producing optical fibers.

Claims

1. A glass preform (1) drawing apparatus for producing a glass rod having a desired outer diameter by heating and drawing a glass preform (1), comprising:

a heating furnace (2) for heating the glass preform (1);
a top chamber (8) for housing the glass preform (1), the top chamber (8) provided above an upper portion of the heating furnace (2) to seal the upper portion of the heating furnace (2);
a feeding unit (4) for feeding the glass preform (1) into the heating furnace (2), the feeding unit (4) provided above the top chamber (8) and connected to a shaft (9) inserted into the top chamber (8), the shaft (9) supporting the glass preform (1); and
an extracting unit (5) for extracting the glass preform (1) from below the heating furnace (2) downwardly,

wherein at a normal operating temperature T in degrees Kelvin of the heating furnace (2), the top chamber (8) is transparent at a wavelength ($\lambda$) in microm-

eters expressed by the following formula 1:

$$\lambda = 2898/T,$$

said normal operating temperature T being in the range 2100 to 2500 K.

2. The glass preform (1) drawing apparatus according to claim 1, wherein the glass preform (1) and the top chamber (8) are made of silica glass.

3. The apparatus according to any one of claims 1 and 2, said apparatus comprising said glass preform (1), said glass preform (1) having a tapered portion (7) at an upper portion of the glass preform (1), said top chamber (8) housing said tapered portion (7).

4. A drawing method for drawing a glass preform (1) by using the glass preform (1) drawing apparatus according to any one of claims 1 to 3, wherein the glass rod (10) produced by drawing the glass preform (1) has an outer diameter of at least 110 mm.


**Patentansprüche**

1. Ziehvorrichtung für eine Glasvorform (1) zum Herstellen eines Glasstabes mit einem gewünschten Außendurchmesser durch Erhitzen und Ziehen einer Glasvorform (1), umfassend:

einen Heizofen (2) zum Erhitzen der Glasvorform (1);
eine obere Kammer (8) zur Aufnahme der Glasvorform (1), wobei die obere Kammer (8) oberhalb eines oberen Abschnitts des Heizofens (2) vorgesehen ist, um den oberen Abschnitt des Heizofens (2) abzudichten;
eine Zuführeinheit (4) zum Zuführen der Glasvorform (1) in den Heizofen (2), wobei die Zuführeinheit (4) oberhalb der oberen Kammer (8) vorgesehen und mit einer in die obere Kammer (8) eingesetzten Welle (9) verbunden ist, wobei die Welle (9) die Glasvorform (1) trägt; und
eine Entnahmeeinheit (5) zum Entnehmen der Glasvorform (1) von unterhalb des Heizofens (2) nach unten,

wobei bei einer normalen Betriebstemperatur T des Heizofens (2) in Grad Kelvin die obere Kammer (8) bei einer Wellenlänge (A) in Mikrometern, die durch die nachstehende Formel 1 ausgedrückt wird, transparent ist:

$$\lambda = 2898/T,$$

wobei die normale Betriebstemperatur T im Bereich von 2100 bis 2500 K liegt.

2. Ziehvorrichtung für eine Glasvorform (1) nach Anspruch 1, wobei die Glasvorform (1) und die obere Kammer (8) aus Quarzglas gefertigt sind.

3. Vorrichtung nach einem der Ansprüche 1 und 2, wobei die Vorrichtung die Glasvorform (1) umfasst, wobei die Glasvorform (1) einen sich verjüngenden Abschnitt (7) an einem oberen Abschnitt der Glasvorform (1) aufweist, wobei die obere Kammer (8) den sich verjüngenden Abschnitt (7) aufnimmt.

4. Ziehverfahren zum Ziehen einer Glasvorform (1) unter Verwendung der Ziehvorrichtung für eine Glasvorform (1) nach einem der Ansprüche 1 bis 3, wobei der durch Ziehen der Glasvorform (1) hergestellte Glasstab (10) einen Außendurchmesser von wenigstens 110 mm aufweist.


**Revendications**

1. Appareil d'étirage de préforme de verre (1) pour produire une tige de verre présentant un diamètre extérieur désiré par chauffage et étirage d'une préforme de verre (1), comprenant :

un four de chauffage (2) pour chauffer la préforme de verre (1) ;
une chambre supérieure (8) pour loger la préforme de verre (1), la chambre supérieure (8) étant prévue au-dessus d'une partie supérieure du four de chauffage (2) pour étanchéifier la partie supérieure du four de chauffage (2) ;
une unité d'alimentation (4) pour introduire la préforme de verre (1) à l'intérieur du four de chauffage (2), l'unité d'alimentation (4) étant prévue au-dessus de la chambre supérieure (8) et reliée à un arbre (9) inséré à l'intérieur de la chambre supérieure (8), l'arbre (9) supportant la préforme de verre (1) ; et
une unité d'extraction (5) pour extraire la préforme de verre (1) provenant d'en dessous du four de chauffage (2) vers le bas,
où, à une température de fonctionnement normal T en degrés Kelvin du four de chauffage (2), la chambre supérieure (8) est transparente à une longueur d'onde (A) en micromètres exprimée selon la formule 1 suivante :

$$\lambda = 2898/T,$$

ladite température de fonctionnement normal T étant comprise entre 2100 et 2500 K.

**2.** Appareil d'étirage de préforme de verre (1) selon la revendication 1, où la préforme de verre (1) et la chambre supérieure (8) sont réalisées en verre de silice.

**3.** Appareil selon l'une quelconque des revendications 1 et 2, ledit appareil comprenant ladite préforme de verre (1), ladite préforme de verre (1) présentant une partie effilée (7) au niveau d'une partie supérieure de la préforme de verre (1), la chambre supérieure (8) logeant ladite partie effilée (7).

**4.** Procédé d'étirage d'une préforme de verre (1) mettant en oeuvre l'appareil de préforme de verre (1) selon l'une quelconque des revendications 1 à 3, où la tige de verre (10) réalisée par étirage de la préforme de verre (1) présente un diamètre extérieur d'au moins 110 mm.

# FIG.1

# FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11147731 A
- JP 11060259 A
- JP 6256034 A
- JP 11209137 A
- US 2002088253 A
- US 5931985 A